# EUROPÄISCHE PATENTANMELDUNG

(11) **EP 2 626 539 A1**
(43) Veröffentlichungstag der Anmeldung: **14.08.2013**
(21) Anmeldenummer: 12154149.4
(22) Anmeldetag: 07.02.2012
(51) Int. Cl.: F02D 41/20, F02D 41/26, F02D 19/10, F02D 19/06

(54) **Steuerschaltung für den Betrieb eines Dieselmotors**

(71) Anmelder: Bernheiden, Uwe, 88069 Tettnang (DE)
(72) Erfinder: Bernheiden, Uwe, 88069 Tettnang (DE)
(74) Vertreter: Stadler, Franz

(57) **Zusammenfassung**

Bei einer Steuerschaltung (1) für den Betrieb eines Dieselmotors (2), bestehend
- aus einem ersten Diesel-Schaltkreis (8) mit einem Regelkontrollgerät (15), durch das die Öffnung und Schließung des Diesel-Injektors (5) gesteuert ist,
und
- aus einem zweiten Autogas-Schaltkreis (17), durch den eine bestimmte Menge von Autogas (31) an einen Gas-Injektor (18) gefördert ist, soll die für den momentanen Betriebszustand des Motors (2) vorgegebene Menge des Dieselkraftstoffes (30) reduziert durch Autogas-Kraftstoff (31) ersetzt werden.

Dazu ist in dem zweiten Schaltkreis (17) ein Steuerüberwachungsgerät (25) vorgesehen, durch welches der Diesel-Injektor (5) während des Einspritzvorganges des Dieselkraftstoffes (30) verschließbar ist, wobei die Zeitspanne zwischen dem Öffnen und Schießen des Diesel-Injektors (5) durch das Regelkontrollgerät (15) mittels des Steuerüberwachungsgerätes (25) messbar ist und in Abhängigkeit von der fehlenden Menge des Dieselkraftstoffes (30) durch das Steuerüberwachungsgerät (25) eine bestimmte Menge von Autogas (31) über den Gas-Injektor (18) in den Zylinder (3) eingespritzt ist, die dem Brennwert des fehlenden Dieselkraftstoffes (30) entspricht.

## Beschreibung

Die Erfindung bezieht sich auf eine Steuerschaltung für den Betrieb eines Dieselmotors, der mindestens einen Zylinder aufweist, nach dem Oberbegriff des Patentanspruches 1.

Es ist bekannt, dass in Fahrzeugen, insbesondere in PKWs und LKWs, Dieselmotoren eingebaut sind, die sowohl mit Diesel als auch mit flüssigem Gas, das als Autogas bezeichnet ist, betrieben sind, um den Dieselverbrauch und damit die Kosten für den Betrieb des Dieselmotors zu minimieren.

Zu diesem Zweck ist der notwendige elektrische Schaltkreis zur Einspritzung des Diesel-Kraftstoffes mit einem Schaltkreis zur Einspritzung des Autogases ergänzt, die unabhängig voneinander das jeweiligen Medium in den Zylinder einspritzen.

Zu diesem Zweck wird üblicherweise der Schaltkreis zur Zuführung des Diesels mit einem Schaltkreis zur Zuführung des Autogases nachträglich ergänzt. Beide Schaltkreise führen unabhängig voneinander das jeweilige Medium dem Brennraum des jeweiligen Zylinders zu.

Für die Erfindung ist es unerheblich, ob das Autogas in flüssiger oder gasförmiger Form dem Motor zugeführt wird. Im Weiteren ist das Prinzip der Flüssiggaseinspritzung in den Ansaugkanal des Zylinders beschrieben. Ebenfalls unerheblich sind die Zylinderzahl und das Taktverfahren des Motors. Wegen der besseren Übersichtlichkeit ist im Folgenden ein Einzylindermotor im Viertaktverfahren mit Common Rail-Einspritzsystem beschrieben. Alle Zylinder eines Motors werden in der gleichen Art und Weise behandelt.

Durch das Regelkontrollgerät des Diesel-Schaltkreises wird dabei die Dieselmenge mit Hilfe eines Diesel-Injektors in den Zylinder eingespritzt.

Unabhängig von der eingespritzten Dieselmenge wird über den zweiten Autogas-Schaltkreis eine einstellbare Menge des Autogases mit Hilfe eines Autogas-Injektors in den Außenkanal eingespritzt.

Als nachteilig hat sich dabei herausgestellt, dass das Regelkontrollgerät des Diesel-schaltkreises keine Kenntnis von der zusätzlich eingebrachten Autogasmenge hat und daher auch keine Reduktion der Dieselmenge vornimmt, um das vom Fahrer über die Gaspedalstellung vorgegeben Drehmoment einzustellen. Die Folge ist, dass die zusätzlich eingebrachte Autogasmenge ein zusätzliches Drehmoment erzeugt. Im Vollastbereich des Motors entsteht daher eine Überlastung, die zu erhöhtem Verschleiß und verringerter Lebensdauer des Motors führt. Somit kann im Volllastbereich auch nur sehr begrenzt zusätzliches Autogas eingebracht werden, was den Dieseleinspareffekt vermindert. Aber auch im Teillastbereich hat der Motor wegen der zusätzlichen Autogasmenge ein höheres Drehmoment als das Regelkontrollgerät des Dieselschaltkreises über die eingespritzte Dieselmenge entsprechend dem Fahrerwunsch vorgibt. Die eingespritzte Dieselmenge, bzw. das daraus resultierende Drehmoment ist jedoch innerhalb des Regelkontrollgerätes des Dieselschaltkreises Eingangsgröße weiterer Steuer- und Regelkreise, die jetzt aufgrund des zusätzlichen Drehmoments wegen des zusätzlich eingebrachten Autogases falsche Ausgangswerte erzeugen. Damit verstimmt sich das gesamte Motormanagement einschließlich des darauf aufbauender Getriebe- und Fahrzeugmanagements, so dass eine bestimmungsgemäße Funktion des Regelkontrollgerätes des Dieselschaltkreises nicht mehr gewährleistet ist. Dieser Umstand verhindert auch im Teillastbereich des Motors die Beimischung größerer Autogasmengen.

Es ist daher Aufgabe der Erfindung, eine Steuerschaltung der eingangs genannten Gattung derart weiterzubilden, dass die für den momentanen Betriebspunkt des Motors erforderliche, vom Fahrer vorgegebene und vom Regelkontrollgerät des Diesel-schaltkreises eingestellte Dieselmenge um einen vorgegebenen Betrag reduziert werden kann, um daraufhin eine ausreichende Autogasmenge dem Motor zuzuführen, welche dem Brennwert des Dieselreduktionsbetrags entspricht, um das vom Regelkontrollgerät des Dieseischaltkreises vorgegebenen Drehmoment einzuhalten und somit das Regelkontrollgerät des Dieselschaltkreises in seiner ursprünglichen Funktion unverändert weiter betrieben ist.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass das Steuerüberwachungsgerät des Autogasschaltkreises elektrisch mit dem Dieselinjektor verbunden ist, kann erreicht werden, dass durch das Steuerüberwachungsgerät des Autogasschattkreises der Dieselinjektor des Zylinders zu einem früheren Zeitpunkt geschlossen ist, als dies durch das Regelkontrollgerät des Dieselschaltkreises erfolgt und dass gleichzeitig durch das Steuerüberwachungsgerät des Autogasschaltkreises die Menge von Autogas dem Zylinder während des Ansaugtaktes zugeführt wird, die benötigt ist, um den fehlenden Brennwert des Dieselreduktionsbetrags auszugleichen.

Das Steuerüberwachungsgerät des Autogasschaltkreises misst, welche Zeitdauer für die Einspritzung der unreduzierten Dieselmenge von dem Regelkontrollgerät des Dieselschaltkreises vorgesehen ist, indem das Steuerüberwachungsgerät des Autogasschaltkreises den vom Regelkontrollgerät des Dieselschaltkreises gewollten Einschalt- und Ausschaltzeitpunkt des Dieselinjektors erfasst.

Aus Einschalt- und ursprünglichen Ausschaltzeitpunkt errechnet das Steuerüberwachungsgerät des Autogasschaltkreises die ursprüngliche Einschaltdauer des Dieselinjektors, welche ein Maß für die vom Regelkontrollgerät des Dieselschaltkreises gewollte Dieselmenge bzw. Drehmoment des Motors ist. Die so ermittelte ursprünglich vorgegebene Einschaltdauer des Regelkontrollgerätrs des Dieselschaltkreises ist für das Steuerüberwachungsgerät des Autogasschaltkreises die Eingangsgröße zur Berechnung des Abschaltzeitpunktes des Dieselinjektors sowie zur Berechnung der zugeführten Autogasmenge des Zylinders.

Folglich kann die eingespritzte Dieselmenge um bis zu 50 Prozent gegenüber einer Dieselkraftstoffeinspritzung mit herkömmlichen elektronischen Steuergeräten reduziert werden, wenn mit Hilfe des Steuerüberwachungsgerätes die Einspritzdauer des jeweiligen Diesel-Injektors zu einem frühest möglichen Zeitpunkt abgeschaltet wird. Gleichzeitig errechnet das Steuerüberwachungsgerät die Menge von Autogas, die in den Luftansaugkrümmer einzufüllen ist, um den fehlenden Brennwert des Diesel-kraftstoffes vollstandig auszugleichen. Die Motorleistung wird daher nicht verändert oder beeinträchtigt, und zwar unabhängig von dem jeweiligen Betriebszustand des Dieselmotors.

Es ist besonders vorteithaft, wenn das Steuerüberwachungsgerät sämtliche den Dieselmotor bildenden Zylinder überwacht und in der jeweiligen Reihenfolge der Zylindertakte feststellt, welche Einspritzdauer das Regelkontrollgerät des Diesel-Schaltkreises tatsächlich an dem unmittelbar vorherigen Zylinder in diesen eingespritzt hätte, um daraus für den nachfolgenden Zylinder zu errechnen, welche Autogasmenge zur Verfügung zu stellen ist, um den Brennwert des fehlenden Diesel-kraftstoffes auszugleichen, denn dadurch entsteht keinerlei zeitliche Verzögerung und der Dieselmotors kann ohne Einschränkungen betrieben werden.

Durch diese Art der Einspritzregelung wird zudem erreicht, dass der Diesel-Schaltkreis weiterhin völlig eigenständig betrieben ist, ohne dass dieser beeinflusst wird. Folglich sind auch sämtliche gesetzlichen Normierungen für den Betrieb von Dieselmotoren in Kraftfahrzeugen erfüllt, da keine Eingriffe in den elektronischen Betrieb zur Einspritzung des Dieselkraftstoffes vorgenommen sind.

In der Zeichnung ist ein erfindungsgemäßes Ausführungsbeispiel einer Steuerschaltung für den Betrieb eines Dieselmotors dargestellt, das nachfolgend näher erläutert ist. Im Einzelnen zeigt:
- Figur 1: die Steuerschaltung zur Einspritzung von Diesel- und Autogaskraftstoff in einen Zylinder des Dieselmotors mit einem ersten und zweiten Schaltkreis,
- Figur 2: den Mess- und Steuerablauf der Steuerschaltung gemäß Figur 1 und
- Figur 3: eine vergrößerte Darstellung der Steuerschaltung gemäß Figur 1 mit einem Steuerüberwachungsgerät, das mit jedem der Diesel-Injektoren des Dieselmotors elektrisch gekoppelt ist.

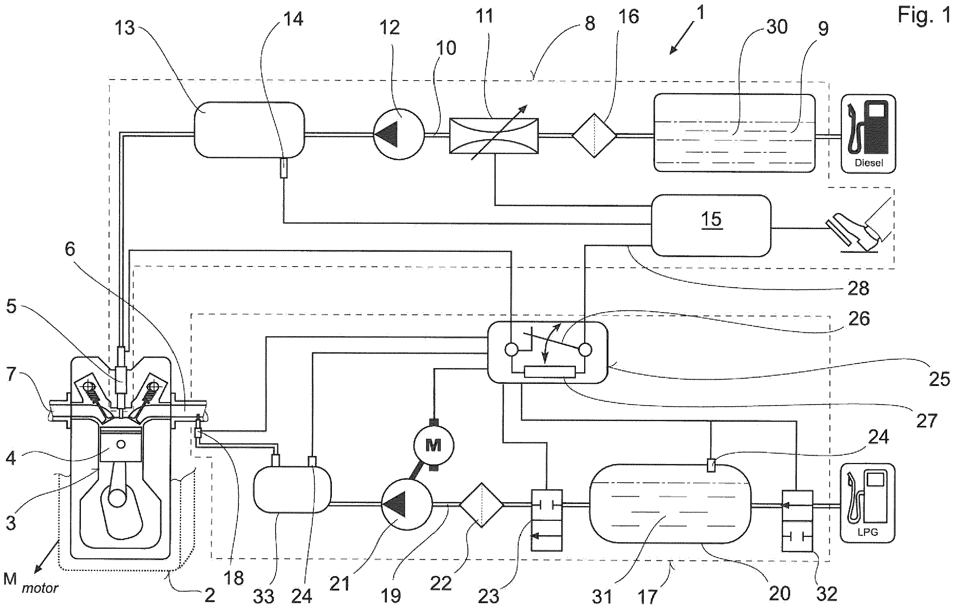

In Figur 1 ist eine Steuerschaltung 1 schematisch abgebildet, durch die ein moderner Dieselmotor 2 elektrisch gesteuert ist, der beispielsweise in einem PKW oder Lastkraftwagen, zu deren Antrieb eingebaut ist. Der Dieselmotor 2 besteht aus einem oder mehreren Zylindern 3, die jeweils einen Brennraum 4 aufweisen, und die im Vier-Takt-Betrieb laufen.

Dabei ist dem Brennraum 4 des Zylinders 3 ein Dieselinjektor 5 zugeordnet, durch den eine bestimmte Menge Diesel 30 aus einem Tank 9 - wie dies nachfolgend näher erläutert ist - eingespritzt wird. Über einen Ansaugkanal 6 wird Luft in den Brennraum 4 des Zylinders 2 eingesaugt, welche im Zündtakt zur Verbrennung der eingespritzten Dieselmenge 30 dient. Die durch die Verbrennung entstandenen Abgase werden im Ausstoßtakt durch einen Auspuff 7 in die Umgebung ausgestoßen.

Zur Steuerung des Dieselmotors 2 ist ein Diesel- und Hydraulikschaltkreis 8 vorgesehen, durch den solche modernen Dieselmotoren 2 elektronisch geregelt sind, um die Dieseleinspritzung individuell für jeden Zylinder zu steuern. Solche Schaltkreise werden auch als Common-Rail-Einspritzsysteme bezeichnet. Durch ein Regelkontrollgerät 15, das auch als Electronic Control Unit (ECU) bekannt ist, wird der DieselKraftstoff 30 in Abhängigkeit von dem gewünschten Betriebszustand des Dieselmotors 2 in den jeweiligen Brennraum 4 des Zylinders 2 eingespritzt. Bei einem Lastwechsel des Dieselmotors 2 erhöht oder verringert sich die einzuspritzende Dieselkraftstoffmenge 30.

Der Diesel 30 wird demnach an einer Tankstelle, die schematisch mit einer Zapfsäule dargestellt ist, in einem Tank 9 eingefügt und dort bevorratet. Von dort gelangt der Diesel 30 in Leitungen 10 über ein Filter 16, einer steuerbaren Saugdrossel 11, einer Hochdruckpumpe 12, einem Druckspeicher 13 zu dem Dieselinjektor 5.

Durch das Regelkontrollgerät 15 des Dieselschaltkreises 8 wird mit Hilfe des Drucksensors 14 der Druck im Druckspeicher 13 konstant gehalten. Dazu wird die Förderleistung der Hochdruckpumpe 12 über die steuerbare Saugdrossel 11 von dem Regelkontrollgerät des Dieselschaltkreises 15 eingestellt.

Das Regelkontrollgerät 15 des Dieselschaltkreises 8 ist elektrisch mit dem Dieselinjektor 5 verbunden und bestromt mit Beschleunigungs- (etwa 20 A) und Haltestrom (etwa 10 A) das Magnetventil des Dieselinjektors 5, um die Einspritzung des Diesels 30 einzuleiten. Die Bestromung erfolgt in getakteter Form, um die Verlustleistung im Regelkontrollgerät 15 des Dieselschaltkreises 8 zu minimieren. In Abhängigkeit von dem vom Regelkontrollgerät 15 des Dieselschaltkreises 8 vorgegebenen Einschaltdauer des bestromten Dieselinjektors 5 wird die geforderte Dieselmenge 30 in den Brennraum 4 des Zylinders 2 eingespritzt.

Bei den zuvor beschriebenen Steuer- und Regelmaßnahmen handelt es sich um bekannte Prinzipien für die Steuerung von modernen Dieselmotoren.

Der verwendete Dieselkraftstoff 30 soll durch die erfindungsgemäße Steuerschaltung 1 um bis zu 80 Prozent reduziert werden.

Zur Einspritzung des Autogases 31 in den jeweiligen Brennraum 4 des Zylinders 3 ist ein zweiter Autogas-Schaltkreis 17 vorgesehen, durch den eine errechnete Menge - wie dies nachfolgend noch näher erläutert wird - zur Verfügung gestellt ist. Der Autogas-Schaltkreis 17 besteht dabei aus einem Autogas-Injektor 18, durch den das Autogas 31 in den Ansaugkrümmer 6 des Dieselmotors 2 in flüssigem Zustand eingespritzt ist. Sobald das flüssige Gas 31 dem Umgebungsdruck ausgesetzt ist, ändert sich der Aggregatszustand von flüssig in gasförmig, so dass das dann gasförmige Autogas 31 mit Hilfe der Ansaugung des jeweiligen vorherigen Zylinders 3 in dessen Brennraum 4 eingesogen ist und dort gemeinsam mit der Luft auf die Verdichtung die Einspritzung des Dieselkraftstoffes 30 und den Zündvorgang wartet.

Das Autogas 31 ist dabei über eine schematisch dargestellte LPG-Zapfsäule in einen Tank 20 eingefüllt, in dem etwa ein Druckzustand von 5 bar vorliegt. Der Tank 20 kann mit etwa 80 Prozent Autogas 31 befüllt sein, um Druckschwankungen aufgrund von Temperaturänderungen auszugleichen. Hierzu schließt der Niveausensor 24 bei 80 % Tankfüllung das Betankungsfreigabeventil 32 und verhindert eine weitere Befüllung des Tanks 20. Aus dem Tank 20 gelangt das Autogas 31 in Leitungen 19 über ein Freigabeventil 23, einem Filter 22, einer Pumpe 21, einem Druckspeicher 33 zu dem Gasinjektor 18. An dem Tank 20 ist eine Gasdruckleitung 19 vorgesehen, durch die das Autogas 31 über einen Filter 22 und ein Ventil 23 mit Hilfe einer Pumpe 21 an den jeweiligen Gas-Injektor 18 gefördert ist. Dazwischen ist noch ein weiterer Druckbehälter 20' einzubauen, um den Förderdruck der Pumpe 21 aufzunehmen, so dass in dem Druckbehälter 20' das flüssige Gas 31 mit einem Druckzustand von etwa 10 bar eingelagert ist. Über die jeweiligen Sensoren 24 wird dieser Druckzustand regelmäßig überwacht und bei Überschreiten eines vorgegebenen Grenzwertes können Sicherheitsventile geöffnet sein, um einen Druckabbau zu erreichen.

Durch das Steuerüberwachungsgerät 25 des Autogasschaltkreises 17 wird mit Hilfe des Drucksensors 24 der Druck im Druckspeicher 33 konstant gehalten. Dazu wird die Förderleistung der Pumpe 21 über den steuerbare Elektromotor der Pumpe 21 von dem Steuerüberwachungsgerät 25 des Autogasschaltkreises 17 eingestellt.

Das Steuerüberwachungsgerät 25 des Autogasschaltkreises 17 ist elektrisch mit dem Autogasinjektor 18 verbunden. In Abhängigkeit von der vom Steuerüberwachungsgerät 15 des Autogasschaltkreises 17 vorgegebenen Zeitdauer des bestromten Autogasinjektors 18 wird die geforderte Autogasmenge 31 in den jeweiligen Ansaugkanal des Zylinders 3 eingespritzt. Hier geht in den gasförmigen Zustand über und gelangt gemeinsam mit der Verbrennungsluft in den Brennraum 4 des Zylinders 3.

Darüber hinaus ist das Steuerüberwachungsgerät des Autogasschaltkreises 25 elektrisch mit dem Dieselinjektor 5 verbunden, um den Dieselinjektor 5 während des Dieseleinspritzvorgangs vorzeitig von der Stromzufuhr abzukoppeln, so dass der Dieselinjektor 5 zum Zwecke der Dieselmengenreduktion vorzeitig schließt und kein weiterer Diesel 30 in den Brennraum 4 des Zylinders 3 gelangen.

Gleichzeitig mit Unterbrechen der Stromzufuhr des Dieselinjektors 5 beginnt das Autogassteuergerät 25 einen sehr geringen Messstrom (etwa 200 mA) durch den Dieselinjektor 5 fließen zu lassen, der so bemessen ist, dass der Dieselinjektors 5 trotzdem sicher schließt.

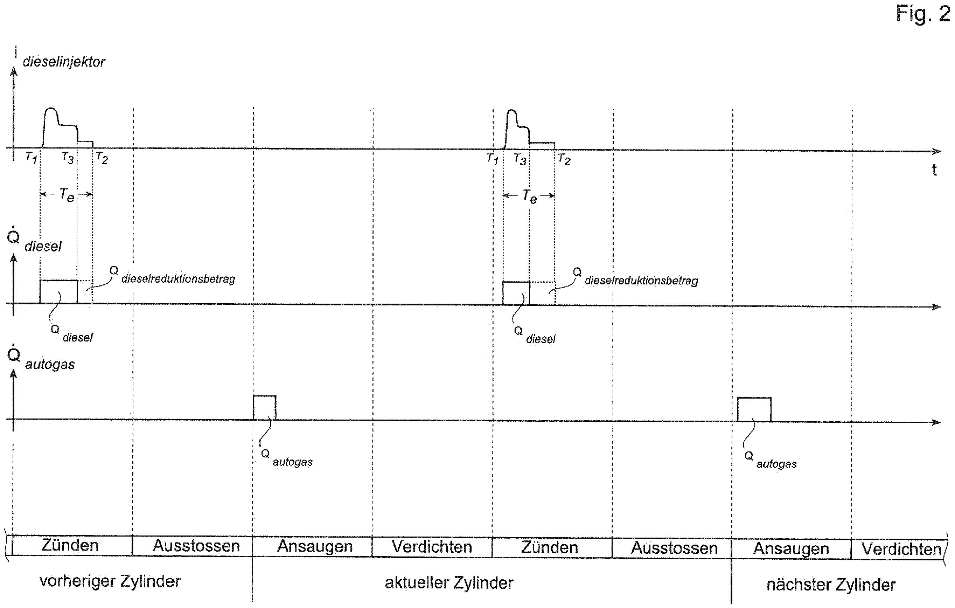

Figur 2 zeigt eine reduzierte Dieseleinspritzung mit zusätzlicher Autogaseinspritzung. Der von dem Regelkontrollgerät 15 des Dieselschaltkreises 8 in das Magnetventil des Dieselinjektors 5 eingeprägte Strom ist jetzt durch das Autogassteuerübertragungsgerät 25 zum Zeitpunkt T3 abgeschaltet, lediglich ein geringer Messstrom fließt weiter. Durch das vorzeitige Abschalten des Dieselinjektors 5 ergibt sich eine reduzierte in den Zylinder 3 eingespritzte Dieselmenge 9. Die durch das vorzeitige Abschalten des Dieselinjektors 5 fehlende Dieselmenge 9 wird von dem Steuerüberwachungsgerät 25 des Autogasschaltkreises 17 in eine äquivalente Autogasmenge 31 umgerechnet und in den darauf folgenden Ansaugtakt eingespritzt, so dass es für die Verbrennung im nächsten Zündtakt zur Verfügung steht. Sowohl Dieselmenge 30 als auch Autogasmenge 31 tragen zum Drehmoment des Zylinders anteilig bei, welches der vom Dieselsteuergerät 15 vorgegebenen Einschaltdauer Te entspricht, welche die vom Fahrer über die Gaspedalstellung vorgegebene Drehmomentanforderung erfüllt.

Sämtliche, die den Dieselmotor 2 bildenden Zylinder 3, sind in identischer Weise mit dem Steuerüberwachungsgerät 25 gekoppelt und werden demnach zeitlich in Reihe von dem Steuerüberwachungsgerät 25 vom Stromnetz getrennt.

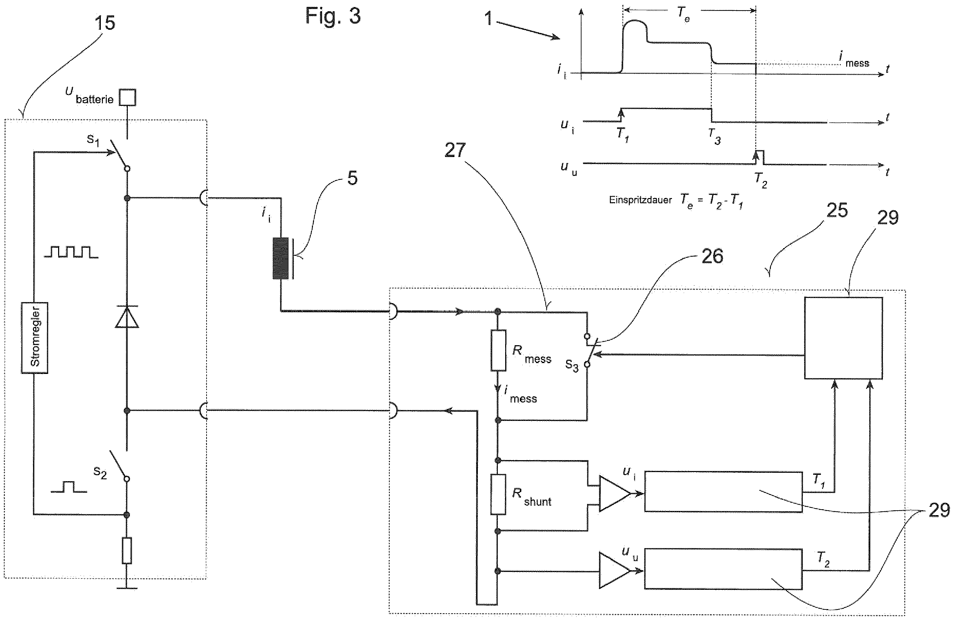

Aus Figur 3 ist der elektrische Steuerungsablauf der Steuerschaltung 1 ersichtlich. Dargestellt ist das Regelkontrollgerät 15 des Dieselschaltkreises 8 mit seiner Endstufe zur Bestromung des Magnetventils des Dieselinjektors 5. Das Magnetventil des Dieselinjektors 5 ist außerdem auch elektrisch mit der Endstufe des Steuerüberwachungsgerätes 25 des Autogasschaltkreises 8 zur Unterbrechung des Dieselinjektorstromes verbunden. Die in beiden Steuergeräten arbeitenden Schalttransistoren S1, S2, S3 sind als elektrische Schalter vereinfachend dargestellt.

Zunächst beginnt das Regelkontrollgerät 15 des Dieselschaltkreises 8 das Magnetventil des Dieselinjektors 5 zum Zeitpunkt T1 zu bestromen, um die Einspritzung der Dieselmenge 30 einzuleiten. Dazu ist der untere Schalter S2 der Endstufe des Regelkontrollgerät 15 des Dieselschaltkreises 8 während der Einschaltdauer des Dieselinjektors 5 geschlossen und der obere Schalter S1 regelt in taktender Art und Weise den Dieselinjektorstrom, unterteil in Beschleunigungs- und Haltestrom, wie in Figur 3 dargestellt. Der Strom wandert von der Batterie über den oberen taktenden Schalter S1 des Regelkontrollgerätes 15 des Dieselschaltkreises 8 zum Magnetventil des Dieselinjektors 5 weiter zum noch geschlossenen Schalter S3 des Autogassteuerüberwachungsgerätes 25, über dessen Messwiderstand Rshunt zur Strommessung hin zum unteren Schalter S2 des Regelkontrollgerät 15 des Dieselschaltkreises 8 und dessen Messwiderstand zur Strommessung der Dieselinjektorstromregelung.

Das Steuerüberwachungsgerät 25 des Autogasschaltkreises 17, genauer der Mikroprozessor mit seinem Ablaufprogramm des Steuerüberwachungsgerät 25 des Autogasschaltkreises 17, erfasst den Bestromungsbeginn T1 des Dieselinjektorstromes über den Messwiderstand Rshunt und der Auswerteschaltung A. Zum Zeitpunkt T3 unterbricht das Steuerüberwachungsgerät 25 des Autogasschaltkreises 17 durch Öffnen des Schalters S3 den Stromfluss durch das Magnetventil des Dieselinjektors 5 und beendet den Einspritzvorgang des Dieselinjektors 5. Über den Widerstand Rmess fließt weiterhin ein geringer Messstrom 28 durch den Dieselinjektor 5. Unterbricht das Dieselsteuergerät 25 zum Zeitpunkt T2 den Messstrom 28 durch das Magnetventil des Dieselinjektors 5, indem Schalter S2 geöffnet wird, erzeugt der Messstrom 26 in der Induktivität des Dieselinjektormagnetventils einen Spannungs-impuls, der von der Auswerteschaltung B gemessen wird.

Aus den Zeitpunkten T1 und T2 errechnet das Steuerüberwachungsgerät 25 des Autogasschaltkreises 17 die von dem Regelkontrollgerät 15 des Dieselschaltkreises 8 gewollte Einspritzdauer Te, welche ein Maß für die geforderte Dieseleinspritzmenge 30 und das vom Fahrer über das Gaspedal gewünschten Drehmoment des Motors ist. Ferner ist die Einschaltdauer Te für das Steuerüberwachungsgerät 25 des Autogasschaltkreises 17 Eingangsgröße zur Berechnung der reduzieren Dieselmenge 30 und des Zeitpunktes T3.

## Patentansprüche

1. Steuerschaltung (1) für den Betrieb eines Dieselmotors (2), der mindestens einen Zylinder (3) aufweist, bestehend
- aus einem ersten Diesel-Schaltkreis (8) mit einem Regelkontrollgerät (15), durch das eine vorgegebene Menge von Dieselkraftstoff (30) aus einem Tank (9) über eine Druckleitung (10) an einen Diesel-Injektor (5) des jeweiligen Zylinders (3) gefördert und durch das die Öffnung und Schließung des Diesel-Injektors (5) in Abhängigkeit von dem Betriebszustand des Dieselmotors 2 in den jeweiligen Zylinder (3) gesteuert ist,
und
- aus einem zweiten Autogas-Schaltkreis (17), durch den eine bestimmte Menge von Autogas (31) aus einem Tank (20) über eine Druckleitung (19) an einen Gas-Injektor (18) gefördert ist, der an den jeweiligen Zylinder (3) des Dieselmotors (2) zur Einspritzung des Autogases (31) angeschlossen ist,
**dadurch gekennzeichnet,**
**dass** in dem zweiten Schaltkreis (17) ein Steuerüberwachungsgerät (25) vorgesehen ist, das mit dem jeweiligen Diesel-Injektor (5) elektrisch gekoppelt ist, dass durch das Steuerüberwachungsgerät (25) der Diesel-Injektor (5) während des Einspritzvorganges des Dieselkraftstoffes (30) verschließbar ist, dass das Steuerüberwachungsgerät (25) elektrisch mit dem Regelkontrollgerät (15) des ersten Schaltkreises (8) verbunden ist, dass die Zeitspanne zwischen dem Öffnen und Schließen des Diesel-Injektors (5) durch das Regelkontrollgerät (15) mittels des Steuerüberwachungsgerätes (25) messbar ist und dass in Abhängigkeit von der fehlenden Menge des Dieselkrafistofles (30) durch das Steuerüberwachungsgerät (25) des zweiten Schaltkreises (17) eine bestimmte Menge von Autogas (31) über den Gas-Injektor (18) in den Zylinder (3) eingespritzt ist, die dem Brennwert des fehlenden Dieselkraftstoffes (30) entspricht.

2. Steuerschaltung nach Anspruch 1,
**dadurch gekennzeichnet,**
**dass** mittels des Steuerüberwachungsgerätes (25) ein Messstrom (28) erzeugt ist, durch den das Regelkontrollgerät (15) während des Einspritzvorganges überwacht ist und dass mittels einer dem Steuerüberwachungsgerät (25) zugeordneten Auswerteeinheit (29) feststellbar ist, welches Zeitintervall zwischen der tatsächlichen Abschaltung des Diesel-Injektors (5) durch das Steuerüberwachungsgerät 25 und dem Schließen des Diesel-Injektors (5) durch das Regelkontrollgerät (15) verstrichen ist.

3. Steuerschaltung nach Anspruch 2
**dadurch gekennzeichnet,**
**dass** durch eine erste Auswerteschaltung (A) des Steuerüberwachungsgerät des Autogasschaltkreises (25) der Dieselinjektor-Bestromungsbeginn des Dieselsteuergerätes (25) erfasst ist, der den Einschaltzeitpunkt der Einspritzung der Dieselmenge (30) kennzeichnet, dass durch eine zweite Auswerteschaltung (B) des Steuerüberwachungsgerät des Autogasschaltkreises (25) nach Unterbrechen des Dieselinjektorstromes durch das Steuerüberwachungsgerät des Autogasschaltkreises (25) das Dieselinjektor-Bestromungsende des Dieselsteuergerätes (25) erfasst ist, indem der weiterhin fließende Messstrom durch den Dieselinjektor (8) beim Ausschalten durch das Dieselsteuergerät (25) wegen der Induktivität des Dieselinjektormagnetventils einen Spannungsimpuls erzeugt, der den Ausschaltzeitpunkt der unreduzierten Dieselmenge (30) kennzeichnet, und dass aus Einschalt- und Ausschaltzeitpunkt die Einschaltdauer des Dieselinjektors (8) zur Einspritzung der unreduzierten Dieselmenge (3) berechnet ist.

4. Steuerschaltung nach Anspruch 2 oder 3,
**dadurch gekennzeichnet,**
**dass** der Messstrom (28) des Steuerüberwachungsgerätes (25) derart gering, vorzugsweise 0,2 Ampere, ist, dass durch diesen der Betriebszustand des Regelkontrollgerätes (15) unverändert ist.

5. Steuerschaltung nach einem der vorgenannten Ansprüche,
**dadurch gekennzeichnet,**
**dass** durch das Steuerüberwachungsgerät (25) die Diesel-Menge (30) und die zeitliche Dauer der Dieseleinspritzung an jedem der Zylinder (3) erfasst ist und dass mit Hilfe der fehlenden zeitlichen Dauer der Dieseleinspritzung an dem zeitlich vorgeschalteten Zylinder (3) durch das Steuerüberwachungsgerät (25) errechnet ist, welche Menge des Autogases (31) für den jeweils zeitlich nachfolgenden Zylinder (3) während eines vorgegebenen Zeitintervalls einzuspritzen ist.

6. Steuerschaltung nach einem der vorgenannten Ansprüche,
**dadurch gekennzeichnet,**
**dass** das Steuerüberwachungsgerät (25) des Autogasschaltkreises (17) einen elektrisch steuerbaren Schalter (26), vorzugsweise einem Transistor, enthält, der elektrisch mit dem Dieselinjektor (5) verbunden ist und durch den der Dieselinjektor (5) durch Unterbrechen des Dieselinjektorstromes abschaltbar ist, in dem der Schalter (26) durch das Steuerüberwachungsgerät (25) des Autogasschaltkreises (17) geöffnet ist, und dass das Steuerüberwachungsgerät (25) des Autogasschaltkreises (17) einen Widerstand parallel zum Schalter (26) aufweist, über den nach dem Unterbrechen des Dieselinjektorstromes durch den Schalter (26) der Messstrom (28) weiterftießt, mit dem der vom Regelkontrollgerät (15) des Dieslschaltkreises (8) für die Einspritzung der unreduzierter Dieselmange (30) gewollte Ausschaltzeitpunkt des Dieselinjektors (5) gemessen ist.
